(19) Europäisches Patentamt
European Patent Office
Office européen des brevets

(11) **EP 1 276 055 B1**

(12) **FASCICULE DE BREVET EUROPEEN**

(45) Date de publication et mention
de la délivrance du brevet:
**01.10.2008 Bulletin 2008/40**

(51) Int Cl.:
***G06F 15/02*** *(2006.01)*

(21) Numéro de dépôt: **02291761.1**

(22) Date de dépôt: **11.07.2002**

(54) **Dispositif et procédé de conversion de données numériques**

Gerät und Verfahren zur Umwandlung von numerischen Daten

Device and method for converting numerical data

(84) Etats contractants désignés:
**AT BE BG CH CY CZ DE DK EE ES FI FR GB GR
IE IT LI LU MC NL PT SE SK TR**

(30) Priorité: **11.07.2001 FR 0109242**

(43) Date de publication de la demande:
**15.01.2003 Bulletin 2003/03**

(73) Titulaire: **Dill, Etienne
75011 Paris (FR)**

(72) Inventeur: **Dill, Etienne
75011 Paris (FR)**

(74) Mandataire: **Catherine, Alain et al
Cabinet Harlé & Phélip
7, rue de Madrid
75008 Paris (FR)**

(56) Documents cités:
**EP-A- 0 837 411          GB-A- 2 207 263
NL-C- 1 006 158**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un dispositif et un procédé de conversion de données numériques.

Plus particulièrement, l'invention concerne la conversion de données exprimées dans un premier système de mesure, dites « données à convertir », en des données exprimées dans un second système de mesure, dites « données converties ».

Ainsi, la présente invention concerne par exemple des convertisseurs de monnaie ou des convertisseurs entre le système métrique et le système anglosaxon.

S'il est vrai que de telles conversions peuvent être effectuées avec tous types de calculatrice, il n'en reste pas moins que toute conversion moyennant une calculatrice nécessite des opérations complexes ou lassantes : lorsque l'on utilise une calculatrice simple sans mémoire, il faut faire toutes les étapes de l'opération mathématique une à une pour chaque conversion; ceci constitue des opérations plus au moins complexes selon les conversions. Et lorsque l'on utilise une calculatrice plus confortable ayant au moins une mémoire dans laquelle on peut enregistrer un coefficient de conversion ou une formule de conversion, les conversions sont certes plus confortables, mais néanmoins lassantes par la monotonie de la répétition des quelques étapes simplifiées. Dans un cas comme dans l'autre, effectuer les conversions à la manière d'une opération mathématique implique un risque accru d'erreur faute de possibilité simple de vérification. Consulter par ex. le document GB 2 207 263 A.

Une autre source d'erreur inhérente à la conversion de données numériques à l'aide d'une calculatrice, est celle du choix de l'opération mathématique. En effet, même les calculatrices simples permettent de convertir des données dans les deux sens, c'est-à-dire du premier système de mesure vers le second et vice versa. Ainsi, pour la conversion moyennant un coefficient de conversion, lorsqu'une donnée à convertir est saisie, l'utilisateur doit choisir entre la multiplication et la division de la donnée avec ce coefficient. Et de manière analogue, pour la conversion moyennant une formule de conversion, lorsqu'une donnée à convertir est saisie, l'utilisateur doit choisir entre l'une et l'autre des deux formules applicables selon le sens de la conversion.

Il est bien entendu possible de réduire le risque d'erreur inhérent à ce choix en équipant la calculatrice avec deux touches particulièrement signalées selon les deux sens de conversion. Mais le seul fait de devoir choisir entre ces deux touches implique que l'utilisateur peut effectuer une conversion dans le mauvais sens sans se rendre compte.

Par ailleurs, quels que soient le confort offert par la calculatrice et les mesures prises pour réduire le risque d'erreur de manipulation, lorsque l'on éteint la calculatrice ou lorsqu'elle s'éteint elle-même après une période prédéfinie de non-utilisation, les mémoires se vident et il faut donc réintroduire le coefficient ou les formules de conversion.

Enfin, même si le coefficient ou la formule de conversion reste enregistré dans la mémoire, il n'en reste pas moins que l'utilisation de la calculatrice nécessite en général deux mains, l'une pour tenir la calculatrice, l'autre pour effectuer les opérations de conversion. De plus, il faut souvent allumer la calculatrice avant de l'utiliser, car elle ne s'allume en général pas toute seule.

Le but de l'invention est de remédier aux inconvénients énoncés ci-avant.

Plus particulièrement, l'invention cherche à simplifier la conversion de données, notamment la conversion de données d'un même premier système de mesure en des données d'un même second système de mesure.

Le but de l'invention est atteint par un dispositif de conversion de données numériques comprenant un clavier pour la saisie des données à convertir, des moyens de conversion et des moyens d'affichage de données.

Selon l'invention, le clavier ne comporte que les touches nécessaires pour la saisie des chiffres d'une donnée à convertir et une touche décimale, et le dispositif de conversion est conçu de façon à faire apparaître instantanément et uniquement la donnée convertie.

Le dispositif de conversion de l'invention ne comprend ainsi que des éléments strictement nécessaires pour la tâche spécifique pour laquelle il a été conçu.

Le dispositif de conversion de l'invention n'est donc pas un moyen de calcul électronique permettant à son utilisateur de choisir des opérations de calcul, mais un dispositif ne permettant d'effectuer des calculs que selon une fonction ou équation enregistrée à cet effet dans une mémoire. Le dispositif de conversion de l'invention est ainsi spécifique en ce qu'il est un convertisseur unidirectionnel instantané.

Selon des modes de réalisation avantageux de l'invention, le dispositif de conversion peut être conçu de façon que son utilisateur puisse le reconfigurer, c'est-à-dire qu'il puisse utiliser le dispositif de conversion pour effectuer des conversions avec différents coefficients ou formules de conversion, mais tout de même avec une seule formule ou un seul coefficient de conversion pour chaque configuration.

Ce principe est illustré selon un premier exemple par un dispositif de conversion destiné à la conversion d'une monnaie en une autre. La saisie d'un prix donné dans la première monnaie conduit directement à l'affichage du prix en la seconde monnaie.

Selon un second exemple, le principe de l'invention est illustré par la conversion d'une température indiquée en degrés Fahrenheit en une valeur selon l'échelle Celsius. Cette seconde conversion n'est donc pas une simple multiplication avec un coefficient de conversion mais un calcul impliquant une fonction mathématique, donc une formule de conversion.

L'invention concerne également les caractéristiques ci-après, considérées isolément ou selon toutes leurs combinaisons techniquement possibles :

- Le clavier comporte uniquement dix touches pour les dix chiffres du système décimal et une touche décimale désignée par convention par le point décimal.

Cette disposition concerne la conversion de données du système décimal. Lorsque la conversion de données d'un autre système est prévue, par exemple la conversion des données en unités de mesure du système anglo-saxon, il peut être nécessaire de pourvoir le dispositif de conversion de deux fonctions séparateur pour séparer les unités de leurs subdivisions, par exemple les « yards» des « feet » et « inches ». Ces deux fonctions peuvent être activées, le cas échéant, par la même touche, la touche séparateur appelée dans le cadre de la présente invention de manière unique la touche décimale.

- Les moyens d'affichage comprennent un écran et des moyens de commande de l'affichage, reliés aux moyens de conversion et à l'écran, les moyens d'affichage étant conçus de façon à ne faire afficher qu'une seule donnée à la fois.

Cette disposition précise les moyens d'affichage sous deux aspects différents. Selon le premier aspect, il est indiqué implicitement que le dispositif de conversion de l'invention ne comprend pas nécessairement lui-même un moyen de visualisation de la donnée convertie. Le dispositif de conversion peut donc être conçu de façon à être relié à un autre appareil électronique tel qu'une calculatrice ou un ordinateur personnel, voire un téléviseur, et se servir de l'écran de visualisation de cet appareil.

Le dispositif de conversion de l'invention peut également être incorporé dans une calculatrice, un organiseur électronique (Personal Digital Assistant , en abrégé : PDA) ou un ordinateur personnel, sous une forme permettant la mise en oeuvre particulière de cette fonction de conversion selon l'invention.

Selon le second aspect, cette disposition précise que le moyen de visualisation appelé ici sommairement « écran » sans précision de sa nature (moyen d'affichage alphanumérique à cristaux liquides, panneau électroluminescent, tube à images à rayons cathodiques, etc.), n'a besoin que d'une capacité d'affichage limitée. Il suffit que ce dispositif de visualisation puisse afficher une seule valeur ou donnée à la fois.

- Les moyens de conversion sont conçus de façon que la donnée convertie soit affichée progressivement au rythme de la saisie des chiffres de la donnée à convertir.

Selon cette disposition, le dispositif de conversion n'est pas conçu de façon à saisir d'abord la donnée à convertir et de déclencher ensuite l'opération de conversion. Au contraire, le dispositif est conçu de façon à ce que chaque saisie d'un chiffre de la donnée à convertir déclenche la conversion du nombre composé par le (ou les) chiffre(s) précédemment saisi(s) et le chiffre saisi en dernier, et l'affichage directe de la valeur ainsi obtenue. Cette disposition évite donc de devoir prévoir une touche de fonction moyennant laquelle la conversion d'une donnée préalablement entièrement saisie est déclenchée.

- Le dispositif de conversion comprend des moyens de commande destinés à faire remplacer l'affichage de la donnée convertie par un affichage de la donnée saisie.

Le dispositif de conversion de l'invention est conçu sous l'aspect d'un affichage direct et instantané du résultat de l'opération de conversion. Il ne comprend donc pas de moyens permettant de vérifier l'exactitude de la saisie de la donnée à convertir avant la conversion de cette donnée, car il est estimé qu'il est plus rapide d'effectuer la conversion deux fois que de vérifier la saisie, déclencher l'opération de conversion et d'obtenir ensuite seulement le résultat de la conversion. De plus, il est estimé qu'une faible expérience de la manipulation de l'appareil contenant le dispositif de conversion de l'invention est déjà suffisante pour obtenir une faible probabilité d'erreurs de saisie.

Si le dispositif de conversion de l'invention doit néanmoins présenter à son utilisateur la possibilité d'afficher la donnée saisie, c'est-à-dire la donnée à convertir, tout en évitant à l'utilisateur une manipulation supplémentaire à cet effet, le dispositif de l'invention comprend alors des moyens de commande destinés à déclencher par eux-mêmes un affichage temporaire de la donnée saisie à la place de la donnée convertie. Ce remplacement temporaire se fait après un laps de temps prédéterminé pendant lequel la donnée convertie est affichée, et est donc limité dans le temps. Ce remplacement peut être cyclique dans le sens que l'affichage instantané de la donnée convertie est remplacé moyennant une première temporisation par l'affichage de la donnée à convertir, l'affichage de la donnée à convertir est remplacé à son tour moyennant une seconde temporisation par l'affichage initial de la donnée convertie, et cette séquence se répète deux ou trois fois, selon ce qui est prévu. Toutefois, lorsqu'une nouvelle donnée à convertir est saisie, ce remplacement temporaire unique ou cyclique est interrompu et fait la place à l'affichage instantané de la nouvelle donnée convertie.

- Selon une variante, les moyens de commande de l'affichage sont conçus de façon à effectuer le remplacement temporaire de l'affichage après un temps fixe prédéterminé, par exemple, après un laps de temps commençant à l'instant de la saisie du premier chiffre de la donnée à convertir.

- Selon une autre variante, le dispositif de conversion comprend des moyens de commande comportant un circuit de temporisation destiné à faire remplacer temporairement l'affichage de la donnée convertie par un affichage de la donnée saisie, c'est-à-dire de la donnée à convertir, lorsqu'un laps de temps prédéterminé s'est écoulé depuis la saisie du dernier chiffre de la donnée à convertir.

Selon cette variante et à l'opposé de la variante précédente, le remplacement de l'affichage de la donnée convertie par la donnée saisie est déclenché automatiquement à la fin d'un laps de temps prédéterminé dont le début est défini par la saisie du dernier chiffre de la donnée à convertir.

Cette disposition est particulièrement adaptée au principe de fonctionnement du dispositif de conversion selon l'invention. En effet, chaque saisie d'un chiffre déclenche une conversion du nombre composé du (ou des) chiffre(s) précédemment saisi(s) et du chiffre saisi en dernier, l'affichage instantané du nombre converti et la remise à zéro d'un circuit de temporisation, que ce chiffre soit un chiffre de la donnée à convertir ou un chiffre saisi par erreur. Lorsque la période de temporisation est écoulée, la donnée saisie est temporairement affichée à la place de la donnée convertie.

- La touche décimale est reliée aux moyens de conversion de façon à rendre possible la saisie d'un taux de conversion.

Cette disposition permet de modifier le taux de conversion initialement enregistré, c'est-à-dire d'enregistrer un nouveau coefficient de conversion, dans le cas d'une application linéaire telle que la conversion d'une monnaie en une autre.

L'accès à cette fonction est donnée, par exemple, par un appui prolongé, de l'ordre de deux secondes, sur la touche décimale. L'appui prolongé sur cette touche déclenche l'affichage du coefficient de conversion enregistré et ouvre la possibilité de saisir un nouveau coefficient qui remplace alors le coefficient précédemment enregistré. Si aucun autre coefficient est saisi, le coefficient précédent reste enregistré dans cette mémoire. Le déclenchement de cette fonction de modification du coefficient de conversion a donc permis à l'utilisateur du dispositif de conversion de l'invention de lire le coefficient de conversion.

Cette fonction est désactivée soit automatiquement moyennant un circuit de temporisation, soit manuellement en appuyant à nouveau de manière prolongée sur la touche décimale.

La fonction de modification décrite ci-avant ne permet cependant pas de modifier une formule de conversion telle que, par exemple, la formule de conversion d'une température de l'échelle Fahrenheit en une valeur de l'échelle Celsius ou vice versa.

Cependant, le dispositif de conversion de l'invention peut être pourvu de deux ou plusieurs mémoires, dans lesquelles sont enregistrées, lors de la fabrication du dispositif, plusieurs coefficients et/ou formules de conversion. Dans ce cas, chaque changement de coefficient ou de formule est effectué en appuyant d'abord sur la touche décimale pendant une période longue prédéterminée, par exemple pendant deux secondes, et en appuyant ensuite brièvement sur la touche décimale autant de fois qu'il faut pour activer la mémoire concernée. La mémoire choisie, et par cela le coefficient ou la formule de conversion choisie, est validée ensuite en appuyant à nouveau sur la touche décimale pendant la période prédéterminée longue.

En variante, un dispositif de conversion selon l'invention ayant une seule mémoire peut être pourvu d'une entrée permettant de relier le dispositif à un ordinateur à partir duquel la formule de conversion enregistrée dans cette mémoire est remplacée par une autre formule ou un autre coefficient.

Le but de l'invention est également atteint par un procédé de conversion de données numériques moyennant un dispositif comprenant un clavier pour la saisie des données à convertir, des moyens de conversion et des moyens d'affichage de données, qui comprend les étapes de saisir la donnée à convertir moyennant le clavier, de convertir la donnée moyennant les moyens de conversion et d'afficher directement et instantanément la donnée convertie.

Le procédé de l'invention concerne également les caractéristiques ci-après, considérées isolément ou selon toutes leurs combinaisons techniquement possibles :

- la donnée convertie est affichée progressivement au rythme de la saisie des chiffres de la donnée à convertir, comme cela est expliqué plus haut ;
- l'affichage de la donnée convertie est remplacé par un affichage de la donnée saisie, lorsqu'un temps de temporisation s'est écoulé depuis la saisie du dernier chiffre de la donnée à convertir ;
- l'affichage de la donnée convertie est remplacé par un affichage temporaire de la donnée saisie, lorsqu'un temps de temporisation s'est écoulé depuis la saisie du dernier chiffre de la donnée à convertir ;
- le procédé comprend l'étape de la saisie d'un taux de conversion.

D'autres caractéristiques et avantages de l'invention ressortiront de la description d'un mode de réalisation du dispositif de conversion de l'invention ci-après en référence aux dessins annexés dans lesquels :

- la figure 1 représente un convertisseur comportant un dispositif de conversion selon l'invention ;
- la figure 2 représente un convertisseur analogue à celle de la figure 1 ;

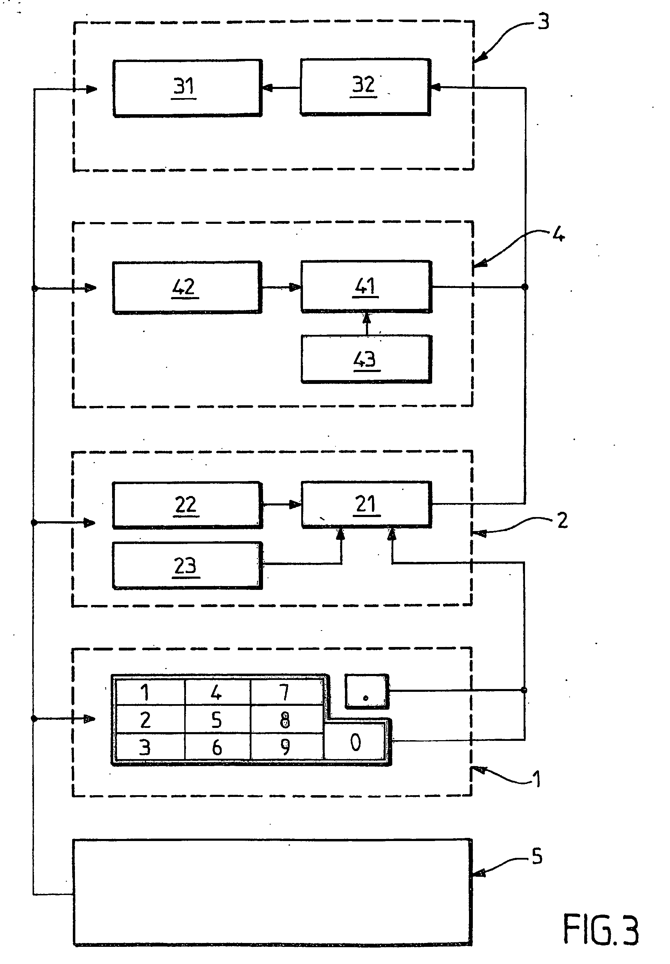

- la figure 3 représente un schéma du dispositif de conversion de l'invention.

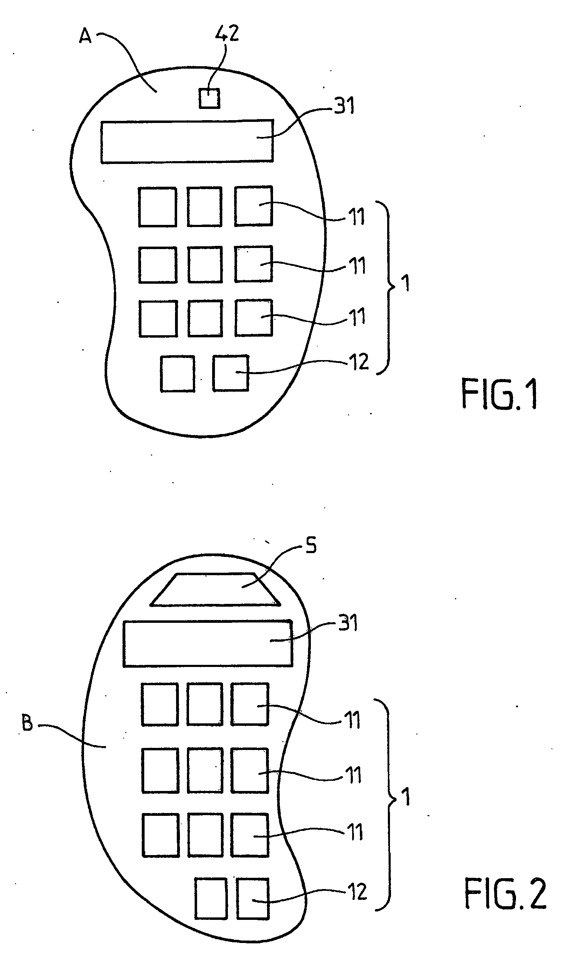

Le convertisseur représenté sur la figure 1 comprend un boîtier A et un dispositif de conversion de données numériques selon l'invention.

Le dispositif de conversion comprend un clavier 1 pour la saisie des données à convertir, des moyens de conversion 2 et des moyens d'affichage 3 de données.

Le clavier 1 comporte dix touches 11 pour la saisie des dix chiffres du système décimal, ainsi qu'une touche séparateur ou touche décimale 12. Le convertisseur est allumé ou mis en route par appui sur une des onze touches du clavier 1.

Les moyens de conversion comprennent, outre un circuit de calcul 21, une mémoire 22 pour le stockage d'un coefficient de conversion et une mémoire 23 pour le stockage d'une fonction de conversion.

Les moyens d'affichage 3 comprennent un écran 31 disposé sur la même face du convertisseur que le clavier 1, ainsi qu'à l'intérieur du boîtier A, des moyens de commande 32 de l'affichage.

Le convertisseur comprend également des moyens de changement temporaire d'affichage 4. Ces moyens peuvent être essentiellement de deux natures, les uns permettant un déclenchement manuel du changement temporaire d'affichage et les autres comprenant un circuit de temporisation pour un déclenchement automatique du changement d'affichage. Les moyens de changement d'affichage ont pour rôle de remplacer temporairement l'affichage de la donnée convertie par l'affichage de la donnée saisie, c'est-à-dire de la donnée à convertir.

Le convertisseur représenté sur la figure 1 comprend des moyens permettant un déclenchement manuel du changement d'affichage. Ces moyens comprennent un circuit de commande 41 avec une mémoire destinée à enregistrer la donnée saisie et non encore convertie ainsi qu'une touche 42 par laquelle l'utilisateur donne un signal au circuit de commande 41 pour transférer la donnée saisie aux moyens d'affichage 3. Les moyens d'affichage 3 étant conçus de façon à pouvoir arrêter l'affichage de la donnée convertie, cet affichage est remplacé par l'affichage de la donnée saisie. Moyennant un circuit de temporisation, l'affichage de la donnée saisie est arrêté après un laps de temps prédéterminé, et l'affichage de la donnée convertie revient.

Le convertisseur comprend par ailleurs une source d'énergie électrique 5 sous la forme d'une pile ou d'une batterie rechargeable, ou encore sous la forme d'un élément photovoltaïque. Selon une variante, le convertisseur est pourvu d'un élément photovoltaïque complété par une pile ou une batterie rechargeable.

Pour certains modes de réalisation du dispositif de conversion de l'invention, il est également concevable que l'alimentation électrique soit assurée par une alimentation électrique extérieure raccordée au dispositif moyennant un câble enfiché dans une prise disposée sur le boîtier A. Dans l'application évoquée plus haut selon laquelle le dispositif de conversion des données de l'invention peut être raccordé à un appareil électronique pour se servir de son écran, une alimentation électrique par le même câble que celui utilisé pour la transmission de données et des commandes d'affichage peut être utilisée.

Le tableau ci-après montre en trois colonnes et quatre lignes de façon schématique le principe selon lequel les chiffres d'une donnée à convertir sont saisis et le résultat de la conversion est affiché.

| Chiffre saisi | Nombre saisi | Nombre affiché |
|---|---|---|
| 1 | 1 | 6,56 |
| 5 | 15 | 98,39 |
| 3 | 153 | 1003,61 |
| ,5 | 153,5 | 1006,89 |

L'exemple choisi est celui de la conversion d'un montant en euros en une contre-valeur en francs français. Le coefficient de conversion 6,55957 est enregistré dans la mémoire 22 du dispositif de conversion et l'opération de multiplication constituant la conversion est enregistrée dans la mémoire 23 du dispositif de conversion. Le résultat de la conversion est affiché arrondi à deux décimales, puisqu'il s'agit d'une conversion de monnaies.

En ce qui concerne la taille des mémoires pour les données à convertir et converties, le ou les coefficients de conversion et les formules de conversion, la capacité de calcul des moyens de conversion et la capacité d'affichage de l'écran, celles-ci dépendent bien sûr de l'application pour laquelle le convertisseur doit être conçu. Pour un convertisseur de monnaie, des prix à six chiffres plus deux décimales pourraient donner la mesure ; pour le taux de conversion, c'est-à-dire le coefficient de conversion, un nombre ayant au total sept chiffres, la place du séparateur décimal (virgule ou point selon la monnaie concernée) étant alors variable, pourrait donner la mesure ; et pour les formules, où il est difficile de donner une indication, il est cité à titre d'exemple non-limitatif la formule de conversion d'une température mesurée en degrés Fahrenheit (°F) en sa contre-valeur en degrés Celsius (°C):

$$°C = (°F - 32) * 5/9 .$$

Pour la conversion d'un prix affiché de 153,5 euros, on saisit successivement, dans l'ordre habituel, les quatre chiffres et la virgule constituant la donnée à convertir, soit 153,5. Au rythme de la saisie de chacun des chiffres de la donnée à convertir, l'affichage du résultat de la conversion s'effectue de la manière suivante :

- on saisit le chiffre 1 ; la saisie de ce premier nombre déclenche sa conversion moyennant le coefficient de conversion ; lorsque la conversion est effectuée, le résultat arrondi à deux décimales selon les règles de conversion en usage, donc 6,56, est affiché instantanément et directement à l'écran ;

- ensuite, on saisit le chiffre 5, c'est-à-dire le deuxième chiffre de la donnée à convertir ; cette saisie donne le nouveau nombre à convertir, soit 15 et déclenche sa conversion ; lorsque cette conversion est effectuée, le résultat arrondi 98,39 est affiché instantanément à la place du résultat précédent ;
- la saisie du chiffre 3 en tant que troisième chiffre de la donnée à convertir modifie, de manière analogue à l'étape précédente, le deuxième nombre saisi 15 en un troisième nombre saisi 153 ; le nombre ainsi obtenu est converti de manière analogue à l'étape précédente et résulte en un troisième nombre converti dont la valeur arrondie 1003,61 est affichée instantanément à la place du résultat précédent ;
- la saisie successive de la virgule décimale et du chiffre 5 en tant que dernier chiffre de la donnée à convertir modifie le troisième nombre à convertir en un quatrième nombre 153,5, la donnée à convertir, qui est convertie de manière analogue à l'étape précédente ; le résultat arrondi, c'est-à-dire la valeur 1006,89 constituant la donnée convertie, est affiché instantanément à la place du résultat précédent dès que la conversion est effectuée.

Puisque le nombre 153,5 constitue la donnée qui doit être convertie, aucun autre chiffre est saisi. Chacune des quatre étapes de l'exemple de saisie donné ci-avant est suivie de la remise à zéro d'un circuit de temporisation 43. Lorsque le temps de temporisation est écoulé, le circuit de temporisation 43 déclenche l'affichage temporaire de la donnée saisie à la place de la donnée convertie.

Si les deuxième, troisième et quatrième étapes de saisie sont effectuées à l'intérieur du laps de temps de temporisation, le compteur de temps correspondant à ce laps de temps est remis à zéro à chaque fois et il n'y a donc pas d'affichage de la valeur saisie.

Si, par contre, après la saisie du quatrième chiffre, il n'y a pas de nouvelle saisie d'un chiffre, la donnée saisie 153,5 est affichée temporairement à la fin du temps de temporisation du circuit de temporisation 43. Après cet affichage temporaire dont la durée est commandée par un autre circuit de temporisation, l'affichage de la donnée convertie 1006,89 revient.

Selon une variante du mode de réalisation du dispositif de conversion de l'invention décrit ci-avant, la touche décimale 12 peut avoir une fonction accessoire permettant de modifier le taux de conversion.

A cet effet, on appuie pendant un temps prédéterminé, par exemple de l'ordre de deux secondes, sur la touche décimale 12 et on saisit ensuite le nouveau coefficient de conversion. Ce nouveau coefficient est enregistré instantanément à la place du précédent dans la mémoire 22. La saisie du nouveau coefficient de conversion est confirmée, et ainsi terminée, par un nouvel appui prolongé sur la touche 12. En cas d'une erreur de saisie, la saisie doit être renouvelée, bien entendu avec la bonne valeur, selon la procédure décrite ci-avant comme s'il s'agissait de la saisie d'un nouveau coefficient de conversion.

Selon encore une autre variante de réalisation, le dispositif de conversion de l'invention comprend deux ou plusieurs mémoires 22 pour l'enregistrement de plusieurs coefficients de conversion. Dans ce cas, on appuie d'abord de manière prolongée sur la touche décimale 12, comme cela est décrit plus haut, et on appuie ensuite autant de fois qu'il faut pour arriver à la mémoire dans laquelle le nouveau coefficient de conversion doit être enregistré. Après la saisie du nouveau coefficient de conversion, cette valeur est validée par un nouvel appui prolongé sur la touche décimale 12. Lors de l'utilisation du convertisseur comprenant un dispositif de conversion selon cette variante de l'invention, on appuie sur la touche décimale 12 d'abord de manière prolongée et ensuite brièvement autant de fois qu'il est nécessaire pour activer la mémoire en question, et on valide ce choix en appuyant à nouveau sur la touche décimale 12 de manière prolongée. Chacun des appuis brefs est suivi de l'affichage du coefficient enregistré dans cette mémoire. Cet affichage est remplacé par l'affichage du nouveau coefficient, s'il en est saisi un.

La figure 2 représente un convertisseur pour la conversion de données numériques, qui diffère du convertisseur représenté sur la figure 1 en ce qu'il comprend un boîtier B ayant une forme différente de celle du boîtier A, un élément photovoltaïque comme source d'énergie électrique 5 et des moyens de changement d'affichage 4 déclenchant automatiquement le changement temporaire de l'affichage. Le convertisseur est allumé ou mis en route par appui sur une des onze touches du clavier 1 ou par une illumination suffisante de l'élément photovoltaïque 5.

La forme du boîtier peut être choisie selon des aspects ergonomiques ou selon des aspects plutôt commerciaux ou publicitaires.

Ainsi, le choix selon des aspects ergonomiques sera orienté par la facilité et la commodité avec lesquelles le convertisseur peut être tenu et manipulé avec une seule main par une personne droitière ou gauchère.

Contrairement à cela, le choix selon des aspects commerciaux ou publicitaires sera orienté par exemple par le domaine d'application. Un convertisseur pour la conversion d'une première monnaie en une seconde monnaie peut avoir une forme qui facilite la décoration du boîtier avec le sigle correspondant à l'une ou l'autre des deux monnaies, et/ou par exemple avec le logo d'une banque offrant le convertisseur à sa clientèle.

**Revendications**

1. Dispositif de conversion de données numériques comprenant un clavier (1) pour la saisie des données à convertir, des moyens de conversion (2), des moyens d'affichage (3) de données, les moyens d'affichage (3) comprenant un écran (31) et des moyens de commande (32) de l'affichage, reliés aux moyens de conversion (2) et à l'écran, et le dispositif de conversion étant conçu de façon à faire apparaître instantanément la donnée convertie et cela progressivement au rythme de la saisie des chiffres de la donnée à convertir, **caractérisé en ce que** les moyens de commande (32) de l'affichage sont conçus de façon à ne laisser affichée qu'une seule donnée à la fois et le clavier (1) ne comporte que les touches (11) nécessaires pour la saisie des chiffres d'une donnée à convertir et une touche décimale (12) et **en ce qu'**il comprend des moyens de commande (4) destinés à faire remplacer l'affichage de la donnée convertie par un affichage de la donnée saisie.

2. Dispositif selon la revendication 1, **caractérisé en ce qu'**il comprend des moyens de commande (4) comportant un circuit de temporisation (41) destiné à faire remplacer l'affichage de la donnée convertie par un affichage de la donnée saisie, lorsqu'un laps de temps prédéterminé s'est écoulé depuis la saisie du dernier chiffre de la donnée à convertir.

3. Dispositif selon l'une quelconque des revendications précédentes, **caractérisé en ce que** la touche décimale (12) est reliée aux moyens de conversion (2) de façon à rendre possible la saisie d'un taux de conversion.

4. Procédé de conversion de données numériques moyennant un dispositif de conversion de données numériques comportant des moyens permettant :

   - de saisir la donnée à convertir moyennant un clavier (1),
   - de convertir la donnée moyennant des moyens de conversion (2) et
   - d'afficher instantanément et directement la donnée convertie progressivement au rythme de la saisie des chiffres de la donnée à convertir, **caractérisé en ce que** l'on met en oeuvre un dispositif selon l'une quelconque des revendications précédentes.

5. Procédé selon la revendication 4, **caractérisé en ce qu'**il comprend l'étape d'un remplacement de l'affichage de la donnée convertie par un affichage de la donnée saisie, lorsqu'un temps de temporisation s'est écoulé depuis la saisie du dernier chiffre de la donnée à convertir.

6. Procédé selon la revendication 4 ou 5, **caractérisé en ce qu'**il comprend l'étape de la saisie d'un taux de conversion, cette étape étant précédée de l'actionnement de la touche décimale.

**Claims**

1. A device for converting numerical data including a keyboard (1) for inputting data to be converted, conversion means (2), data display means (3), the display means (3) including a screen (31) and display control means (32), connected to the conversion means (2) and to the screen, and the conversion device being designed so as to expose the converted datum instantly and this gradually as the figures of the datum to be converted are input, **characterised in that** the control means (32) of the display are designed so as to leave on the display a single datum at a time and the keyboard (1) only includes the keys (11) necessary for inputting the figures of a datum to be converted and a decimal key (12) and **in that** it contains control means (4) intended for replacing the display of the converted datum with a display of the input datum.

2. A device according to claim 1, **characterised in that** it contains control means (4) including a delay circuit (41) intended for replacing the display of the converted datum with a display of the input datum, when a predetermined period of time has elapsed since the last figure of the datum to be converted was input.

3. A device according to any of the previous claims, **characterised in that** the decimal key (12) is connected to the conversion means (2) so as to enable inputting a conversion ratio.

4. A method for converting numerical data using a device for converting numerical data containing means enabling:

   - to input the datum to be converted via a keyboard (1),
   - to convert the datum via conversion means (2) and
   - to display the converted datum instantly and directly and this gradually as the figures of the datum to be converted are input, **characterised in that** a device according to any of the previous claims is implemented.

5. A method according to claim 4, **characterised in that** it contains the step of replacing the display of the converted datum with a display of the input datum, when a delay time has elapsed since the last figure of the datum to be converted was input.

6. A method according to claim 4 or 5, **characterised in that** it contains the step of inputting a conversion ratio, this step being preceded by the actuation of the decimal key.

**Patentansprüche**

1. Gerät zum Umwandeln numerischer Daten mit einer Tastatur (1) zur Eingabe der umzuwandelnden Daten, Umwandelmitteln (2), Mitteln zur Anzeige (3) der Daten, wobei die Mittel zur Anzeige (3) ein Display (31) und Mittel zur Steuerung (32) der Anzeige aufweisen, die mit den Umwandelmitteln (2) und dem Display verbunden sind, und wobei das Umwandelgerät so konzipiert ist, dass die umgewandelten Daten sofort angezeigt werden, und dies allmählich im Laufe der Eingabe der Ziffern der umzuwandelnden Daten, **dadurch gekennzeichnet, dass** die Mittel zur Steuerung (32) der Anzeige so konzipiert sind, dass sie jeweils nur einen Datensatz angezeigt lassen und dass die Tastatur (1) nur die Tasten (11) aufweist, die zum Eingeben der Ziffern von umzuwandelnden Daten erforderlich sind, sowie eine Dezimaltaste (12), und dass sie Mittel zur Steuerung (4) aufweist, die dazu bestimmt sind, die Anzeige der umgewandelten Daten durch eine Anzeige der eingegebenen Daten zu ersetzen.

2. Gerät nach Anspruch 1, **dadurch gekennzeichnet, dass** es Mittel zur Steuerung (4) aufweist, die eine Verzögerungsschaltung (41) aufweisen, die dazu bestimmt ist, die Anzeige der umgewandelten Daten durch eine Anzeige der eingegebenen Daten zu ersetzen, immer wenn eine vorausbestimmte Zeitspanne seit der Eingabe der letzten Ziffer der umzuwandelnden Daten verstrichen ist.

3. Gerät nach einem der vorhergehenden Ansprüche, **dadurch gekennzeichnet, dass** die Dezimaltaste (12) mit den Umwandelmitteln (2) derart verbunden ist, dass die Eingabe eines Umwandlungssatzes ermöglicht wird.

4. Umwandlungsverfahren numerischer Daten mittels eines Umwandlungsgeräts numerischer Daten, das Mittel aufweist, die Folgendes erlauben:

   - Eingabe der umzuwandelnden Daten mittels einer Tastatur (1),
   - Umwandeln der Daten mittels der Umwandelmittel (2) und
   - sofortiges und direktes Anzeigen der umgewandelten Daten allmählich im Laufe der Eingabe der Ziffern der umzuwandelnden Daten, **dadurch gekennzeichnet, dass** man ein Gerät nach einem der vorhergehenden Ansprüche umsetzt.

5. Verfahren nach Anspruch 4, **dadurch gekennzeichnet, dass** es den Schritt eines Ersetzens der Anzeige der umgewandelten Daten durch eine Anzeige der eingegebenen Daten aufweist, wenn eine Verzögerungszeit seit der Eingabe der letzten Ziffer der umzuwandelnden Daten verstrichen ist.

6. Verfahren nach Anspruch 4 oder 5, **dadurch gekennzeichnet, dass** es den Schritt des Eingebens eines Umwandlungssatzes aufweist, wobei diesem Schritt das Betätigen der Dezimaltaste vorausgeht.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2207263 A